# EUROPEAN PATENT APPLICATION

(11) **EP 4 141 998 A1**
(43) Date of publication of application: **01.03.2023**
(21) Application number: 21193221.5
(22) Date of filing: 26.08.2021
(51) Int. Cl.: H01M 8/04014, H01M 8/04089, H01M 8/0432, H01M 8/04492, H01M 8/04746, H01M 8/04119

(54) **METHOD FOR OPERATING A FUEL CELL, COMPUTER PROGRAM AND FUEL CELL SYSTEM**

(71) Applicant: Technische Universität Braunschweig, 38106 Braunschweig (DE)
(72) Inventor: GAO, Dr. Xin, 38104 Braunschweig (DE); KÖSTERS, Till Lennart, 38102 Braunschweig (DE)
(74) Representative: Gramm, Lins & Partner Patent- und Rechtsanwälte PartGmbB

(57) **Abstract**

The invention is related to a method for operating a fuel cell with the following features:
a) supplying a predominantly hydrogen-containing gas to an anode gas inlet port of the fuel cell,
b) supplying a predominantly oxygen-containing gas to a cathode gas inlet port of the fuel cell,
c) cooling of the fuel cell,
d) controlling the humidity of at least a part of the fuel cell.

The invention is further related to a computer program for performing such method and to a fuel cell system having at least one fuel cell.

## Description

The invention is related to a method for operating a fuel cell with the following features:
a) supplying a predominantly hydrogen-containing gas to an anode gas inlet port of the fuel cell,
b) supplying a predominantly oxygen-containing gas to a cathode gas inlet port of the fuel cell,
c) cooling of the fuel cell,
d) controlling the humidity of at least a part of the fuel cell.

The invention is further related to a computer program for performing such method and to a fuel cell system having at least one fuel cell.

It is widely accepted that using fuel cell systems in a civil aircraft can improve the design in multiple ways, such as reduced noise, lowered emissions and higher fuel economy and thus is better suited than traditional aircrafts. To further strengthen their competences in the aviation sector, the weight reduction and reliability improvement of these aviation fuel cell system designs are of great importance.

Fuel cells are power generation devices that electrochemically convert the energy stored in fuels into electricity. There are various types normally named after their electrolytes, such solid oxide fuel cells (SOFCs), phosphoric acid fuel cell (PAFCs), polymer electrolyte membrane (PEM) fuel cells. Among them, PEMFCs are one of the most promising especially in mobile applications.

Inside a fuel cell system, it is common that its cooling subsystem takes up about 25% of the total system weight. This makes the efficient heat rejection become increasingly important for an aviation fuel cell system, or in general, for any fuel cell system treating light weight as an important feature. As of now, fuel cells applied in aviation are limited to kilowatts either as primary power supplies on small experimental aircraft or as auxiliary power sources for aircraft. For fuel cell systems up to mega-watts as a primary power supply for commercial airliners, there are still many problems to solve, for example for an efficient heat rejection.

Furthermore, system reliability is of great importance in the aviation sector and often achieved through system redundancy. According to a previous study carried out by the inventors, a minimum 2.25 redundancy is required for a fuel cell powered airliner to pass the safety certification. This however increases the total system weight and limits the payload of the aircraft drastically. Hereon, reducing the total number of the system components, i.e., increasing the system simplicity is seen as an effective direction in enhancing the system reliability. This is because it is commonly admitted that the balance of plant (BoP) components around the fuel cells in a system are the most frequent failure sources.

It is an object of the present invention to improve the system efficiency and reliability of a fuel cell and a corresponding fuel cell system, in particular, for use in the aviation area. It is a further object to provide a computer program for efficient control of a fuel cell.

This object is achieved by a method for operating a fuel cell with the following features:
a) supplying a predominantly hydrogen-containing gas to an anode gas inlet port of the fuel cell,
b) supplying a predominantly oxygen-containing gas to a cathode gas inlet port of the fuel cell,
c) cooling of the fuel cell,
d) controlling the humidity of at least a part of the fuel cell,
e) wherein the cooling of the fuel cell is performed solely or predominantly s1) directly by the supplied predominantly hydrogen-containing gas
   and/or
   s2) by recirculation of the predominantly hydrogen-containing gas in an anode-side recirculation circuit, which feeds the predominantly hydrogen-containing gas exiting at an anode gas outlet port of the fuel cell back to the anode gas inlet port
      and/or
   s3) by recirculation of the predominantly oxygen-containing gas in a cathode-side recirculation circuit, which feeds the predominantly oxygen-containing gas exiting at a cathode gas outlet port of the fuel cell back to the cathode gas inlet port.

Alternatively or additionally, the controlling of the humidity of at least a part of the fuel cell is performed solely or predominantly by such steps s1) and/or s2) and/or s3).

The cathode gas inlet port of the fuel cell can be any kind of connection where the predominantly oxygen-containing gas can be fed into the cathode side of the fuel cell. The predominantly oxygen-containing gas can be air from the ambient atmosphere or pure or at least nearly pure oxygen. In general, the predominantly oxygen-containing gas can be any oxygen-containing gas mixture which is sufficient for operating a fuel cell. The anode gas inlet port of the fuel cell can be any kind of connection where the predominantly hydrogen-containing gas can be fed into the anode side of the fuel cell. The predominantly hydrogen-containing gas can be pure hydrogen or any hydrogen-containing gas mixture which is sufficient for operating a fuel cell. It is advantageous if the hydrogen-containing gas mixture consists mainly of hydrogen.

A fuel cell normally needs some kind of cooling. The cooling of the fuel cell can be part of an overall temperature management of the fuel cell. Further, it is required to control the humidity of at least a part of the fuel cell, for example the anode membrane side, the cathode membrane side or any flow channels. The control of the humidity can be part of an overall humidity management of the fuel cell. The fuel cell can be controlled by a control unit which carries out such temperature management and/or humidity management.

According to the invention either the cooling of the fuel cell, the control of the humidity or both can be performed by one or more of the aforementioned steps s1), s2), s3). According to step s1), the predominantly hydrogen-containing gas is directly fed from a hydrogen tank into the anode gas inlet port of the fuel cell. Of course, there can be a flow control device for controlling the flow of hydrogen into the anode gas inlet port. However, no pre-heating step of the predominantly hydrogen-containing gas before feeding it into the anode gas inlet port is required, as it is present in some prior art systems. In this way, the complexity of the system is reduced and the efficiency of the predominantly hydrogen-containing gas for cooling the fuel cell is improved.

According to step s2), a feedback loop for feeding back the predominantly hydrogen-containing gas which exits on the anode-side of the fuel cell back to the anode gas inlet port is proposed. In this way, with very simple constructional elements the temperature management and the humidity management of the fuel cell can be significantly improved.

According to step s3), a feedback loop for feeding back the predominantly oxygen-containing gas which exits on the cathode-side of the fuel cell back to the cathode gas inlet port is proposed. In this way, with very simple constructional elements the temperature management and the humidity management of the fuel cell can be further significantly improved

A higher simplicity of a fuel cell and a fuel cell system can be realized through
1) eliminating the dedicated humidifier by fuel cell self-humidification or integrating the function into other subsystems, and
2) simplifying the cooling loop design.

The word "predominantly" means that the respective element and/or function provides the main (or major) share of the whole composition and/or functionality, e.g. more than 50% of the whole composition and/or functionality. For example, one or more of the aforementioned steps s1), s2), s3) may provide for main share of cooling power, and/or for the main share of water management.

Referring to a typical liquid-cooled fuel cell system as known in the prior art, considering all the above challenges and possible solutions on system weight and reliability, the inventors propose a new concept in this disclosure, namely direct hydrogen cooling (HC) for fuel cells and/or an accompanied active water management improvement. Applying this HC concept solely or together with air cooling (AC) or phase change cooling with heat pump (PCHP), most likely all the above goals can be addressed to a substantial extent. In order to provide background information to support the proposed merits, general cooling methods of fuel cells and their respective issues as well as water management of fuel cells will be discussed in the following.

As the described invention is especially well suited for the implementation in air-cooled fuel cells, the operation conditions as well as challenges of air-cooled fuel cells will be discussed with greater detail in the following. Active air cooling uses e.g. blowers to generate an air stream which blows through the fuel cell stack. This provides oxygen needed for the fuel cell reaction and cooling of the fuel cell stack simultaneously. Due to the forced convection of air, active air cooling can be used at greater power levels when being compared to passive air cooling. However, air is not ideal as a coolant due to its poor thermal conductivity and large air mass flows are needed at greater power levels. This causes blowers at large power levels to have a high parasitic power consumption which is undesired. This is especially true for high altitudes, where the low density of air increases the required volumetric flow and thus parasitic blower power even further. Air-cooled fuel cells have the advantage of being simple in regard to the system design. This is extremely valuable for reliability-and-weight sensitive applications such as the aeronautical area. Because system simplicity goes hand-in-hand with system reliability, and the auxiliary weight of a typical fuel cell system takes up more than 1/3 of the total system weight. However, fuel cell air cooling still has a few major technical challenges that stop these fuel cells from entering the mainstream power source market. These challenges are:
1) Air cooling is usually realized by extremely large stoichiometry of the cathode air stream, which is the same stream supplying the oxidant to the electrochemical reactions. This large magnitude airflow risks drying out the cell electrolyte membrane, of which the water content is of critical importance in keeping up the cell's power output and lifetime.
2) In avoiding this risk, a solution among several others has been commonly implemented. It is the introduction of an extra micro-porous layer (MPL). However, this extra layer hinders the cell internal species transportation. Besides, it is also a potential failure source of a cell.
3) All in all, the power density of an air-cooled cell is only about 1/5 of liquid-cooled opponent. This in the end limits the air-cool cells from the massive market penetration.

The here described invention of an anode exhaust gas recirculation cooling loop for PEM and other fuel cells for aircraft application aims to provide a highly efficient thermal management for fuel cell systems, for example operated as power supply for commercial airliners. Furthermore, it provides means to manage the water balance within the fuel cell and thus is likely to be advantageous to current water balancing systems. In addition, disadvantages of state-of-the-art water management systems such as reduced reliability and species transfer can possibly be mitigated.

### Water management of PEM fuel cells

In order to operate properly, the membrane of the PEM fuel cell must be hydrated. Thus, water management of the PEM fuel cell is of crucial importance. Water is produced by the electrochemical reaction inside the fuel cell and also enters the fuel cell over the reactant gases. The heat generated by the electrochemical reaction continuously dries the membrane of the fuel cell as the relative humidity of the reactant gases declines due to the temperature raise inside the fuel cell. This effect is intensified if the reactant gases are not properly humidified before entering the fuel cell stack. Inside the fuel cell, water is pulled from the anode to the cathode by the electro-osmotic drag. Contrarily, water is also driven from the cathode to the anode due to the concentration gradient. Pressure gradients between the reactant gasses also influence the water balance, by pushing the water to the low-pressure side.

This invention is suitable, for example, for a category of PEM fuel cell system designs, namely hydrogen-cooled fuel cells, and their operating strategies so both the heat and water managements of these devices can be enhanced. Ideally, self-humidification can be realized for these fuel cells thanks to hydrogen-cooling. These improvements are extremely valuable for PEM fuel cell system designs aiming light weight, performance and configuration simplicity, for example in aeronautical applications. For the illustration purposes, this patent disclosure is taking PEMFC systems for aviation as an example. However, it must be highlighted that this invention claims all the applicable scenes essentially utilizing a hydrogen stream for both cooling and water management enhancement purposes, e.g., in PEM electrolysis, as well. In an advantageous embodiment, the exhaust air of the fuel cell stack is also recirculated for cooling and water management enhancement purposes.

### Hydrogen cooling for fuel cells

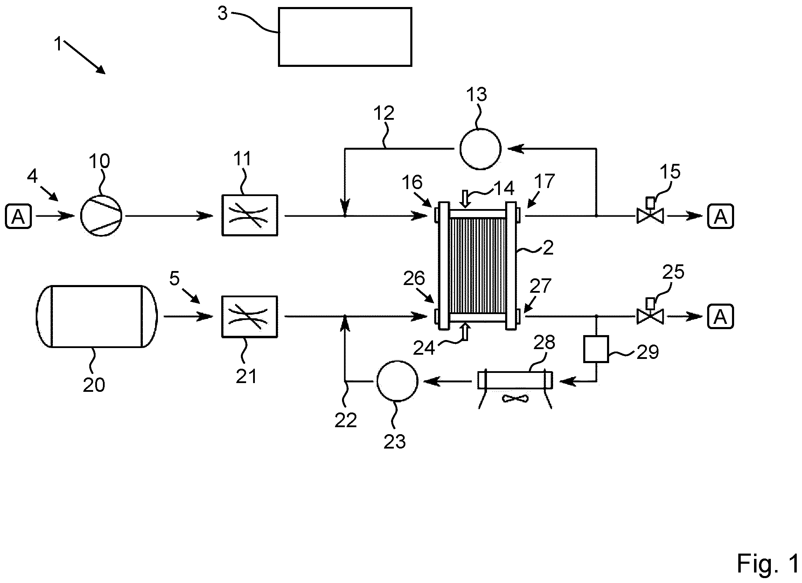

An aspect of the invention consists in hydrogen cooling of a fuel cell stack. As one advantageous embodiment, this is done through recirculation of the anode exhaust gas in a PEM fuel cell system. In one variant of the invention, the cathode exhaust gas is also recirculated. To achieve this, high stoichiometric ratios are required. The exhaust gasses are recirculated by individual recirculation circuits. The recirculation circuits can comprise a control device, for example, a recirculation pump and/or an ejector. Furthermore, the anode exhaust gas can pass through a dynamic water gas separator and/or a heat exchanging device before being recirculated into the anode gas inlet port. The recirculation ratio as well as the inlet fuel gas mass streams are dynamically regulated by a flow control device to achieve the desired operation condition of the fuel cell stack. A scheme of the described system can be seen in Figure 1.

The anode exhaust gas consists mainly of hydrogen, which has superior cooling capabilities when being compared to air. Furthermore, the cathode exhaust gas recirculation also provides some degree of cooling to the fuel cell stack. Thus, a significant improvement of the thermal management efficiency can be achieved by the invention.

### Water management improvement

Especially the cathode exhaust gas is very humid and provides a more effective humidification when being compared to the anode exhaust gas. Through recirculation of the exhaust gases, the water balance in the fuel cell stack can be adequately controlled for varying operation conditions. In order to realize that, a dynamic water separator can be implemented in the anode exhaust gas stream in one advantageous embodiment. Furthermore, a controlling device is used to actively change the amount of water separated from the anode exhaust gas stream depending on the humidity level inside the fuel cell stack.

In conclusion, while both exhaust gas recirculation loops are improving the cooling and water management issues, the anode exhaust gas is recirculated mainly for both cooling and active water management of the PEM fuel cell system and the cathode exhaust gas mainly for improved water management, mainly for supplying enough water. Exhaust gas recirculation of the cathode gas also reduces the necessary compression power especially in aeronautical fuel cell systems. As of now, exhaust gas recirculation has not been applied for cooling the fuel cell system. Furthermore, more flexibility in water management is potentially achieved, which possibly can promote self-humidification of the membrane and allows optimization of the membrane design.

The way state-of-the-art fuel cells are commonly cooled depends on the system power and the application field. In mobile systems especially, air cooling, liquid cooling or phase-change cooling are commonly applied. Usually, a cooling loop is required to separate the coolant from the fuel cell system. This entails additional mass and in most cases power consumption of the coolant pump which is undesired. For small scale fuel cell application, the fuel cell can be cooled by the inlet air stream. This is unfeasible for larger scale application, as the required air stream is comparatively high and would lead to a dry-out of the fuel cell. Furthermore, the pumping power needed for the required air stream is comparatively large.

Hydrogen is very well suited as a coolant. This is due to hydrogens low density, high specific heat and thermal conductivity which make it a superior coolant for this application. Also, it can be said that there are no safety and technical readiness issues of using hydrogen as a coolant.

Water balance is one of the greatest challenges associated with PEMFC. Depending on the load and the operating conditions, PEM fuel cells can flood or dry-out the electrolyte membrane. If the membrane is not adequately humidified, proton conductivity and thus performance of the cell decreases. Furthermore, the lifetime of the fuel cell is reduced if the membrane is operated under dry conditions. State-of-the-art PEM fuel cells incorporate different physical or chemical strategies to achieve the correct water balance e.g. external humidifiers, hydrophobic coating layers, sponge wicks or micro porous layer.

According to an advantageous embodiment of the invention, the temperature of at least a part of the fuel cell is controlled by influencing the recirculation quantity of the predominantly hydrogen-containing gas in the anode-side recirculation circuit and/or of the predominantly oxygen-containing gas in the cathode-side recirculation circuit. Therefore, a temperature control is proposed which uses and controls the recirculation gas quantity in the anode-side recirculation circuit and/or in the cathode-side recirculation circuit. This allows for an efficient temperature control with a low complexity of the required parts. For example, the recirculation quantity can be controlled by a gas flow control device like a valve or the like, or by a pump or ejector.

According to an advantageous embodiment of the invention, the humidity of at least a part of the fuel cell is controlled by influencing the recirculation quantity of the predominantly hydrogen-containing gas in the anode-side recirculation circuit and/or of the predominantly oxygen-containing gas in the cathode-side recirculation circuit. This allows for a simple and efficient way of controlling the humidity of the fuel cell. In an advantageous embodiment, the same gas flow control devices in the anode-side recirculation circuit and the cathode-side recirculation circuit can be used for both the temperature control and the humidity control.

According to an advantageous embodiment of the invention, the humidity of at least a part of the fuel cell is controlled by influencing the water quantity separated via a water separator from the predominantly hydrogen-containing gas in the anode-side recirculation circuit and/or from the predominantly oxygen-containing gas in the cathode-side recirculation circuit. Such water separator can be implemented in the form of a dynamic water gas separator which separates dynamically the water from the gas. This has the advantage that the extracted water can be used for other purposes, for example for increasing the humidity of parts of the fuel cell which are to dry.

According to an advantageous embodiment of the invention, the humidity of at least a part of the fuel cell is controlled by influencing the back diffusion from the cathode to the anode of the fuel cell. This allows for an additional control of the humidity without significant increase of the complexity of the system.

The above-mentioned object of the invention is also achieved by a computer program with program code means arranged for performing a method of the aforementioned kind, when the computer program is executed on a computer. In this way, the mentioned advantages of the invention can also be achieved. The computer program can be executed on a computer of the control unit of the fuel cell system.

The above-mentioned object of the invention is also achieved by a fuel cell system having at least one fuel cell which has an anode gas inlet port, a cathode gas inlet port, an anode gas outlet port and a cathode gas outlet port, the anode gas outlet port is connected to the anode gas inlet port via at least one anode-side recirculation circuit, so that gas emerging from the anode gas outlet port can be at least partially fed back to the anode gas inlet port via the anode-side recirculation circuit, and/or the cathode gas outlet port being connected to the cathode gas inlet port via at least one cathode-side recirculation circuit, so that gas exiting from the cathode gas outlet port can be at least partially fed back to the cathode gas inlet port via the cathode-side recirculation circuit, characterized in that the fuel cell system has at least one control unit which is set up to carry out a temperature management and/or a humidity management of the fuel cell by carrying out a method of the aforementioned kind. In this way, the mentioned advantages of the invention can also be achieved.

According to an advantageous embodiment of the invention, the anode gas outlet port is connectable to the atmosphere via at least one anode-side outlet valve and/or the cathode gas outlet port is connectable to the atmosphere via at least one cathode-side outlet valve. This allows for additional control of the gas flow in the anode gas path and/or the cathode gas path. Through the anode-side outlet valve the anode gas can be released into the ambience. Through the cathode-side outlet valve the cathode gas can be released into the ambience. The cathode-side outlet valve can be for example a bypass valve. The anode-side outlet valve can be a purge valve or a discharge valve, for example.

According to an advantageous embodiment of the invention, at least one heat exchanger is arranged in the anode-side recirculation circuit, through which heat contained in the predominantly hydrogen-containing gas can be transferred to the ambience. This provides for an efficient way of cooling the gas before it is reintroduced into the anode gas inlet port. Such heat exchanger can be implemented in the system in a simple way without increasing the system complexity significantly.

According to an advantageous embodiment of the invention, at least one heat exchanger is arranged in the cathode-side recirculation circuit, through which heat contained in the predominantly oxygen-containing gas can be transferred to the ambience. This provides for an efficient way of cooling the gas before it is reintroduced into the cathode gas inlet port. Such heat exchanger can be implemented in the system in a simple way without increasing the system complexity significantly.

According to an advantageous embodiment of the invention, at least one controllable water separator is arranged in the anode-side recirculation circuit, by means of which water contained in the predominantly hydrogen-containing gas can be separated from the gas, and/or at least one controllable water separator is arranged in the cathode-side recirculation circuit, by means of which water contained in the predominantly oxygen-containing gas can be separated from the gas. In this way, the water management of the fuel cell system can be improved with simple and efficient means.

According to an advantageous embodiment of the invention, at least one anode-side control device for controlling the flow of the gas through the anode-side recirculation circuit is arranged in the anode-side recirculation circuit and/or at least one cathode-side control device for controlling the flow of the gas through the cathode-side recirculation circuit is arranged in the cathode-side recirculation circuit. By such anode-side and/or cathode-side control device the flow of gas through the respective recirculation circuit can be automatically controlled in a safe and simple way. Such control device can be implemented, for example, in the form of a valve, pump and/or ejector which can be controlled stepwise or continuously.

According to an advantageous embodiment of the invention, the fuel cell system has a first supply port for supplying the predominantly hydrogen-containing gas, the first supply port being connected to the anode gas inlet port via a first flow control device by which the supplied amount of the predominantly hydrogen-containing gas can be controlled, and/or the fuel cell system has a second supply port for supplying the predominantly oxygen-containing gas, the second supply port being connected to the cathode gas inlet port via a second flow control device by which the supplied amount of the predominantly oxygen-containing gas can be controlled. In this way, an efficient input supply management for managing the input of the gases to the system can be implemented with a high reliability.

For example, the control of the temperature and/or the humidity of the fuel cell can be done by the control unit by controlling one, more or all of the following components, if available:
- anode-side outlet valve,
- cathode-side outlet valve
- heat exchanger,
- controllable water separator,
- anode-side control device
- cathode-side control device
- first flow control device,
- second flow control device.

### Further significant benefits achieved by the invention

1. Due to the exhaust gas recirculation other means of humidification (e.g. microporous layer, external humidifier) are most likely no longer required. This allows a decrease of the system size while maintaining the system power which results in a higher stack power density. The stack power density is of great importance in mobile applications.
2. By cooling the fuel cell stack via exhaust gas recirculation, a dedicated cooling loop becomes possibly obsolete. This decreases the overall system mass and parasitic power consumption of the fuel cell system which leads to an increase in system efficiency.
3. As already stated, with the introduction of anode exhaust gas recirculation several subsystems are most likely no longer required such as an external cooling loop or means of humidification. This entails a significant decrease of the complexity of the system and decreases the likelihood of system failure. In aviation, safety is a major concern which is often ensured through redundancy. This however increases the overall system mass of state-of-the-art PEM fuel cell systems by a factor of 2.25, which is undesired from an efficiency point of view. Thus, decreasing the complexity of the system is advantageous in aircraft application and achieved by the innovation.
4. The recirculation of the exhaust cathode gas stream allows a reduction of the external air mass flow. This leads to a decrease of the parasitic power consumption of the compressor which provides the fuel cell stack with ambient air. This is especially important in applications with lower ambient pressure, in which cases the compression power is more pronounced e.g. in aviation application or fuel cell applications pressurized to a few bars.
5. The system dynamics can also be potentially improved, as hydrogen cooling causes less pressure loss and thus less pumping power than conventional air or liquid cooling due to its comparatively low diffusion coefficient.
6. The invention provides at least one possibility of bleeding some of the recirculated gases off. This is important to prevent accumulation of inert gases in the recirculation loop.
7. In order to provide meaningful cooling and humidification of the fuel cell stack through exhaust gas recirculation, high stoichiometric ratios are required. High stoichiometric ratios promote an improved reactant distribution across the membrane. This is desired, as an uneven distribution of reactants would lead to e.g. temperature gradients on the fuel cell membrane. This reduces the lifetime of the fuel cell stack and is undesired. Thus, a longer lifetime of the fuel cell stack can be achieved by the innovation.
8. During start-up of the fuel cell system, high voltages occur which can damage the membrane and decrease the lifetime of the fuel cell stack. Through exhaust gas recirculation, the start-up ability of the fuel cell system is improved as high voltages can be mitigated.

As one advantageous embodiment, the invention comprises an air-cooled PEM fuel cell where the exhaust gas of the anode and cathode are recirculated in separate recirculation circuits. The anode exhaust gas passes a heat exchanger where the gas is cooled before being reintroduced to the anode gas inlet. The invention also includes at least one embodiment where a dynamic water gas separator and a nitrogen separator is implemented in the anode exhaust gas recirculation circuit. The control devices which control the recirculation can consist of, but are not limited to, recirculation pumps or multi-nozzle ejectors. The invention also provides a control unit which can dynamically adapt the anode and cathode exhaust gas recirculation rates, the anode and cathode inlet gas streams as well as the water gas separator depending on the fuel cell operation parameters. Furthermore, the invention also includes a coolant loop design with the respective heat exchanging device for the anode exhaust gas.

As one other advantageous embodiment, only the anode gas is recirculated for cooling purposes. Humidification of the membrane is regulated by a humidification device. In this advantageous embodiment, a coolant loop and heat exchanging device for the anode exhaust gas as well as a dynamic water separator and nitrogen separator are implemented. The control unit in this advantageous embodiment of the invention features, but is not limited to, control of the supplied predominantly hydrogen-containing gas mass flow to the anode gas inlet port and adjustment of the water separation ratio.

Depending on the operation condition of the fuel cell stack, the control unit can regulate the fuel cell system in one advantageous embodiment according to one, several or all of the following methods 1) to 9):

### 1) Anode membrane side too humid

If the anode membrane is too humid, the control unit will regulate in one advantageous embodiment the dynamic water gas separator to extract more water from the anodic exhaust gas leaving the anode gas outlet port. Thus the recirculated anodic exhaust gas will dry the anode membrane to ensure good performance. In another advantageous embodiment, the recirculation ratio of either or both sides will be changed so that the anode membrane side is dried.

### 2) Anode Membrane side too dry

If the anode membrane is too dry, the dynamic water gas separator will be regulated in one advantageous embodiment by the control unit such that less water is extracted from the anode exhaust gas stream. The humid exhaust gas will then humidify the membrane to prevent damage to the membrane. In another advantageous embodiment, the recirculation ratio of either or both sides will be changed so that the anode membrane side is humidified.

### 3) Cathode membrane side too humid

In case the cathode membrane is too humid, the air recirculation ratio in the cathode-side recirculation circuit is reduced by the control unit. In the following, more dry ambient air will enter the cathode which will dry the membrane and ensure safe performance.

### 4) Cathode membrane side too dry

In case the cathode membrane is to dry, the air recirculation ratio in the cathode-side recirculation circuit is increased by the control unit. Thus, more humid air will reenter the fuel cell stack leading to a humidification of the cathode membrane.

### 5) Anodic flow channels flooded

If flooding of the anodic flow channels has already occurred and increasing the water separation in the dynamic water separator is no longer viable, the control unit will flush the fuel cell stack. In this scenario, the predominantly hydrogen-containing gas is no longer recirculated and leaves the recirculation circuit via the anode-side outlet valve. The water blocking the flow channel will then be flushed out by the predominantly hydrogen-containing gas so that normal operation of the fuel cell stack can continue.

### 6) Cathodic flow channels flooded

When the cathodic flow channel is flooded and reducing the recirculation ratio of the cathode exhaust gas is no viable option the control unit will flush the system. For this, the exhaust gas is not recirculated and leaves the fuel cell stack with the excess water over the cathode-side outlet valve. Then, normal operation of the fuel cell stack can continue.

### 7) Fuel cell stack temperature too high

If the fuel cell stack operation temperature is higher than the set limit, the control unit will increase the mass flow of the supplied predominantly hydrogen-containing gas into the system. This will increase the cooling of the fuel cell stack and prevent overheating and damaging of the fuel cell stack. If the fuel cell stack temperature cannot be sufficiently lowered by increasing the mass flow of the supplied predominantly hydrogen-containing gas, the control unit can increase the mass flow of the supplied predominantly oxygen-containing gas into the system for additional cooling.

### 8) Fuel cell stack temperature too low

In the possible scenario where the fuel cell stack operation temperature is too low, the mass flow of the supplied predominantly hydrogen-containing gas into the system is decreased by the control unit. This will decrease the heat flow rejected by the anode exhaust gas stream to the environment and thus lead to an increase of the fuel cell stack operation temperature. In any case, the mass flow of the supplied predominantly hydrogen-containing gas into the system is not lowered beyond the minimum stochiometric ratio required for good performance of the fuel cell stack.

### 9) Poor fuel cell stack temperature distribution

If the temperature across the membrane of the fuel cell stack in poorly distributed, the control unit can separately increase both supplied gas mass flows into the system to increase the cooling capability and achieve a more uniform distribution of the membrane temperature. As hydrogen cooling is more effective when being compared to air cooling, the control unit will prioritize increasing the mass flow of the supplied predominantly hydrogen-containing gas into the system.

The invention offers a wide range of applications. First and foremost, it can be used in air cooled PEM fuel cell system to alleviate the disadvantages and provide reliable cooling and humidification to the fuel cell system. While the invention can improve future fuel cell design in multiple ways, it can also be used to upgrade fuel cell systems which are already operating. The innovation can readily be exploited in aviation applications on small (e.g. drones) and large scale (e.g. commercial airliners) level, where air cooled fuel cells are promising and partially already in use. Furthermore, the invention improves the cold start-up ability of the fuel cell system. This will open an especially important commercial opportunity for the use in stationary applications for power supply in remote areas.

In addition, the anode exhaust gas recirculation for cooling purposes can also be used to alleviate existing thermal management subsystems. Thus, existing fuel cell systems can be upgraded by the presented invention, which allows many potential exploitations.

In systems including fuel cell systems, where other subsystems (e.g. batteries) require thermal management, the invention can also be used for cooling purposes of these temperature sensitive subsystems. Especially batteries have a high degree of hybridization with fuel cell systems due to their alleviation of potential power peaks as they occur in automotive or aviation application. The inventors see here many possible exploits.

An implementation of the invention in other fuel cell types and electrolysers is also possible, which increases the possible applications and exploits even further.

Figure 1 shows an exemplary fuel cell system 1 comprising a fuel cell 2, a control unit 3 and several mechanical and/or electromechanical control elements. The control unit 3 is set up for control of some or all of the control elements, in order to control the operation of the fuel cell 2. At least a part of the control steps executed by the control unit 3 comprise a temperature management and a humidity management of the fuel cell 2.

The fuel cell 2 has a cathode gas inlet port 16, a cathode gas outlet port 17, an anode gas inlet port 26 and an anode gas outlet port 27. The cathode gas inlet port 16 is connected through a first flow control device 10, for example an air mass flow controller, to an air compressor 10. The air compressor 10 is connected with its input side 4 to the atmosphere A. The air compressor 10 is not required in any kind of use case of the fuel cell system 1. However, if the fuel cell system 1 is operated in environments with low air pressure, for example in the aviation area in high flight altitudes, by the compressor 10 an improved supply of air to the cathode-side of the fuel cell 2 is possible. The anode gas inlet port 26 is connected through a second flow control device 20, for example an air mass flow controller, with its input side 5 to a hydrogen storage 20. On the anode-side, the predominantly hydrogen-containing gas is supplied from the hydrogen storage 20 to the input side 5 of the fuel cell system 1.

The cathode gas outlet port 17 is connected via a cathode-side recirculation circuit 12 to the cathode gas inlet port 16. For control of the stream of gas flowing through the cathode-side recirculation circuit 12, there is a cathode-side control device 13 in the cathode-side recirculation circuit 12. The cathode gas outlet port 17 can be connected to the ambience A through a cathode-side outlet valve 15.

The anode gas outlet port 27 is connected via an anode-side recirculation circuit 22 to the anode gas inlet port 26. For control of the stream of gas flowing through the anode-side recirculation circuit 22, there is an anode-side control device 23 in the anode-side recirculation circuit 22. The anode gas outlet port 27 can be connected to the ambience A through an anode-side outlet valve 15. In the anode-side recirculation circuit 22 there is in addition a heat exchanger 28 and a water separator 29 which are connected in series.

Further, for executing temperature control and humidity control of the fuel cell 2, the fuel cell 2 is equipped with anode-side sensors 24 and cathode-side sensors 14. These sensors are set up to measure at least the temperature and the humidity in at least one part of the fuel cell on the anode-side and the cathode-side. The signals of the sensors 14, 24 are supplied to the control unit 3. The control unit 3 is set up to execute the temperature control and humidity control, as described above, by sending control signals to the anode-side outlet valve (25), cathode-side outlet valve (15), heat exchanger (28), controllable water separator (29), anode-side control device (23), cathode-side control device (13), first flow control device (21) and second flow control device (11).

However, the sensors are not absolutely necessary. Sensor-less controls can be feasible, e.g. if maps of relations between the main operating variables can be drawn.

## Claims

1. Method for operating a fuel cell (2) with the following features:
a) supplying a predominantly hydrogen-containing gas to an anode gas inlet port (26) of the fuel cell (2),
b) supplying a predominantly oxygen-containing gas to a cathode gas inlet port (16) of the fuel cell (2),
c) cooling of the fuel cell (2),
d) controlling the humidity of at least a part of the fuel cell (2),
**characterized in that**
e) the cooling of the fuel cell (2) is performed solely or predominantly
- directly by the supplied predominantly hydrogen-containing gas
and/or
- by recirculation of the predominantly hydrogen-containing gas in an anode-side recirculation circuit (22), which feeds the predominantly hydrogen-containing gas exiting at an anode gas outlet port (27) of the fuel cell back to the anode gas inlet port (26)
and/or
- by recirculation of the predominantly oxygen-containing gas in a cathode-side recirculation circuit (12), which feeds the predominantly oxygen-containing gas exiting at a cathode gas outlet port (17) of the fuel cell back to the cathode gas inlet port (16)
and/or
f) the controlling of the humidity of at least a part of the fuel cell (2) is performed solely or predominantly
- directly by the supplied predominantly hydrogen-containing gas
and/or
- by recirculation of the predominantly hydrogen-containing gas in an anode-side recirculation circuit (22), which feeds the predominantly hydrogen-containing gas exiting at an anode gas outlet port (27) of the fuel cell back to the anode gas inlet port (26)
and/or
- by recirculation of the predominantly oxygen-containing gas in a cathode-side recirculation circuit (12), which feeds the predominantly oxygen-containing gas exiting at a cathode gas outlet port (17) of the fuel cell back to the cathode gas inlet port (16).

2. The method according to claim 1, **characterized in that** the temperature of at least a part of the fuel cell (2) is controlled by influencing the recirculation quantity of the predominantly hydrogen-containing gas in the anode-side recirculation circuit (22) and/or of the predominantly oxygen-containing gas in the cathode-side recirculation circuit (12).

3. Method according to one of the preceding claims, **characterized in that** the humidity of at least a part of the fuel cell (2) is controlled by influencing the recirculation quantity of the predominantly hydrogen-containing gas in the anode-side recirculation circuit (22) and/or of the predominantly oxygen-containing gas in the cathode-side recirculation circuit (12).

4. Method according to one of the preceding claims, **characterized in that** the humidity of at least a part of the fuel cell (2) is controlled by influencing the water quantity separated via a water separator (29) from the predominantly hydrogen-containing gas in the anode-side recirculation circuit (22) and/or from the predominantly oxygen-containing gas in the cathode-side recirculation circuit (12).

5. Method according to one of the preceding claims, **characterized in that** the humidity of at least a part of the fuel cell (2) is controlled by influencing the back diffusion from the cathode to the anode of the fuel cell (2).

6. Computer program with program code means arranged for performing a method according to one of the preceding claims, when the computer program is executed on a computer.

7. Fuel cell system (1) having at least one fuel cell (2) which has an anode gas inlet port (26), a cathode gas inlet port (16), an anode gas outlet port (27) and a cathode gas outlet port (17), the anode gas outlet port (27) is connected to the anode gas inlet port (26) via at least one anode-side recirculation circuit (22), so that gas emerging from the anode gas outlet port (27) can be at least partially fed back to the anode gas inlet port (26) via the anode-side recirculation circuit (22), and/or the cathode gas outlet port (17) is connected to the cathode gas inlet port (16) via at least one cathode-side recirculation circuit (12), so that gas exiting from the cathode gas outlet port (17) can be at least partially fed back to the cathode gas inlet port (16) via the cathode-side recirculation circuit (12), **characterized in that** the fuel cell system (1) has at least one control unit (3) which is set up to carry out a temperature management and/or a humidity management of the fuel cell (2) by carrying out a method according to one of claims 1 to 5.

8. Fuel cell system according to claim 7, **characterized in that** the anode gas outlet port (27) is connectable to the atmosphere (A) via at least one anode-side outlet valve (25) and/or the cathode gas outlet port (17) is connectable to the atmosphere (A) via at least one cathode-side outlet valve (15).

9. Fuel cell system according to one of claims 7 to 8, **characterized in that** at least one heat exchanger (28) is arranged in the anode-side recirculation circuit (22), through which heat contained in the predominantly hydrogen-containing gas can be transferred to the ambience.

10. Fuel cell system according to one of claims 7 to 9, **characterized in that** at least one controllable water separator (29) is arranged in the anode-side recirculation circuit (22), by means of which water contained in the predominantly hydrogen-containing gas can be separated from the gas, and/or at least one controllable water separator (29) is arranged in the cathode-side recirculation circuit (12), by means of which water contained in the predominantly oxygen-containing gas can be separated from the gas.

11. Fuel cell system according to one of claims 7 to 10, **characterized in that** at least one anode-side control device (23) for controlling the flow of the gas through the anode-side recirculation circuit (22) is arranged in the anode-side recirculation circuit (22) and/or at least one cathode-side control device (13) for controlling the flow of the gas through the cathode-side recirculation circuit (12) is arranged in the cathode-side recirculation circuit (12).

12. Fuel cell system according to one of claims 7 to 11, **characterized in that** the fuel cell system (1) has a first supply port (5) for supplying the predominantly hydrogen-containing gas, the first supply port (5) being connected to the anode gas inlet port (26) via a first flow control device (21) by which the supplied amount of the predominantly hydrogen-containing gas can be controlled, and/or the fuel cell system (1) has a second supply port (4) for supplying the predominantly oxygen-containing gas, the second supply port (4) being connected to the cathode gas inlet port (16) via a second flow control device (11) by which the supplied amount of the predominantly oxygen-containing gas can be controlled.

13. Fuel cell system according to one of claims 7 to 12, **characterized in that** the control unit (3) is arranged to perform the temperature management and/or the humidity management of the fuel cell (1) by controlling one, more or all of the following components, if available:
- anode-side outlet valve (25),
- cathode-side outlet valve (15),
- heat exchanger (28),
- controllable water separator (29),
- anode-side control device (23),
- cathode-side control device (13),
- first flow control device (21),
- second flow control device (11).
